# EUROPÄISCHE PATENTANMELDUNG

(11) **EP 2 100 762 A2**
(43) Veröffentlichungstag der Anmeldung: **16.09.2009**
(21) Anmeldenummer: 09003374.7
(22) Anmeldetag: 09.03.2009
(51) Int. Cl.: B60J 11/00

(54) **Abschließbarer Dachkoffer zum Verstauen von Abdeckfolien für Personenkraftfahrzeuge**

(30) Priorität: 14.03.2008 DE 202008003642 U
(71) Anmelder: Fieger, Maximilian, 81373 München (DE); Weingärtner, Franz Albert, 91171 Greding (DE)
(72) Erfinder: Fieger, Maximilian, 81373 München (DE); Weingärtner, Franz Albert, 91171 Greding (DE)

(57) **Zusammenfassung**

Abschließbarer Koffer (Staubox, Dachbox) zum Verstauen von Abdeckfolien ("Autogaragen", Autoplanen) für Personenkraftfahrzeuge bestehend aus einer magnetischen Grundplatte (4) zur Befestigung und Fixierung des Koffers (1/2), einer automatischen Hebevorrichtung (3) zum Öffnen des Koffers, einer Schließvorrichtung mit Schloss (5) und einer Abdeckfolie (9) mit einer mittig angebrachten Öffnung zur Befestigung am Koffer (1/2).

## Beschreibung

### Erfindungsgebiet

Die Erfindung bezieht sich auf einen Koffer (Staubox, Dachbox) der auf dem Fahrzeugdach eines Personenkraftfahrzeugs ohne Montagearbeiten angebracht und fixiert werden kann und zum vereinfachten Anbringen und Verstauen einer Pkw-Abdeckfolie ("Autogarage") dient.

### Hintergrund der Erfindung

Abdeckfolien ("Autogaragen", Abdeckplanen) für Personenkraftfahrzeuge zum Schutz vor Vereisung und Schnee im Winter und zum Schutz vor Sonneneinstrahlung im Sommer sind ohne besondere Vorrichtungen nur schwierig am Fahrzeug anzubringen. Sie sind zudem weder effektiv vor Diebstahl noch vor Verwehung durch Wind geschützt. Das Verstauen der Folie im Fahrzeug z.B. im Kofferraum führt im Winter nach kurzer Zeit zu erhöhter Feuchtigkeit im Fahrzeuginnenraum und kann damit zur Vereisung der Scheiben im Inneren des Fahrzeugs führen.
Die derzeit im Handel erhältlichen Abdeckfolien ("Autogaragen") finden insbesondere wegen oben angeführter Probleme nur geringen Zuspruch, obwohl die Verwendung einer Abdeckfolie einen Vielzahl von Nutzen bietet. Abgesehen von den oben bereits angeführten Vorteilen im Winter und Sommer wird zum Beispiel der Einblick in den Fahrzeuginnenraum verhindert, wodurch die Gefahr des Diebstahl von im Fahrzeug verbleibenden Gegenständen vermindert wird. Des weiteren wird durch die Abdeckfolie die Verschmutzung des Fahrzeugs verhindert (z.B. Blüten- und Pollenstaub, Baumharz, Tauben- und Vogelkot u.ä.).

Die Anmelder der vorliegenden Erfindung haben ihre Erfindung entworfen und ausgeführt, um das Anbringen und Verstauen von Abdeckfolien zu vereinfachen und weitere Vorteile zu erreichen.

Die Erfindung wird im Hauptanspruch definiert und charakterisiert, während die abhängigen Ansprüche weitere Merkmale der Erfindung beschreiben.

Zweck der Erfindung ist es, das Anbringen und Verstauen einer Abdeckfolie ("Autogarage") wesentlich zu erleichtern, den Diebstahl und die Verwehung der Abdeckfolie zu verhindern sowie das Einbringen und die Bildung von Feuchtigkeit im Fahrzeuginnenraum zu vermeiden.

Mit der Erfindung wird erreicht, dass die Abdeckfolie mit geringem Aufwand und geringer Dauer von ca. zwei bis vier Minuten über dem Personenkraftfahrzeug angebracht und in ca. ein bis zwei Minuten wieder im Koffer verstaut werden kann. Dies wird durch die Fixierung (feste Anbringung) des Koffers auf dem Fahrzeugdach mittels einer magnetischen Grundplatte und durch die Fixierung der Abdeckfolie im Innenraum des Koffers erreicht. Dadurch kann die Abdeckfolie beim Anbringen und Verstauen der Folie nicht verrutschen und dies selbst bei stärkerem Wind.

Die Abdeckfolie ist durch den verschließbaren Koffer vor einfachem Diebstahl geschützt und kann auch bei starkem Wind nicht vom Fahrzeug verweht werden. Da der Koffer nur im geöffneten Zustand vom Fahrzeugdach abgenommen werden kann, ist ein einfacher Diebstahl der Folie und des Koffers im verschlossenen Zustand nur durch ein gewaltsames Vorgehen möglich.

Die auf der Folie anhaftende Feuchtigkeit gelangt nicht in das Fahrzeug wie beim Verstauen von einfachen Abdeckfolien im Kofferraum, da sie bei Fahrten mit dem Fahrzeug in dem am Dach angebrachten Koffer verbleiben kann. Der mittels magnetischer Grundplatte fixierte Koffer kann insbesondere bei Stadtfahrten, aber auch bei Fahrten mit höherer Geschwindigkeit auf dem Fahrzeugdach verbleiben. Auch beim Verstauen des Koffers im Fahrzeuginnenraum, z. B. im Kofferraum verbleibt der wesentliche Teil der Feuchtigkeit im Koffer.

Der Koffer besteht aus einem Unterteil und einem Oberteil. Die beiden Kofferteile werden vorzugsweise durch eine im Koffer montierte Hebevorrichtung verbunden. Alternativ können die beiden Teile durch ein im Koffer montiertes feststehendes Rohr verbunden werden. Am Unterteil des Koffers ist eine magnetische Grundplatte montiert. Alternativ sind andere Vorrichtungen zur Befestigung und Fixierung des Koffers möglich. Gummibänder verbinden den Kofferunterteil mit der Grundplatte. Am Kofferoberteil befindet sich eine Schließvorrichtung mit Schloss. Die Abdeckfolie ist im Koffer fest angebracht.

Der Koffer besteht vorzugsweise aus einem Kofferoberteil und einem Kofferunterteil. Der Koffer hat vorzugsweise eine aerodynamische Form. Die Außenmaße sind von der Vielzahl der möglichen Varianten der Kofferform abhängig. Die Länge des Koffers kann ca. 30 bis 120 cm betragen bei einer Breite von ca. 15 bis 80 cm. Die Höhe beträgt hierbei ca. 10 bis 25 cm. Das Oberteil und das Unterteil des Koffers bestehen vorzugsweise aus hitze- und kältebeständigen sowie UV-Licht-beständigen Kunststoffen (z.B. Polyethylen, Polystyrol u.ä.) und/oder Glas- und Kohlefasern. Die Verwendung der Erfindung ist alternativ nur mit dem Kofferoberteil ohne Verwendung des Kofferunterteils möglich. Hierbei wird die magnetische Grundplatte durch Verkürzung der Rohre der Hebevorrichtung direkt durch das Kofferoberteil abgedeckt.

Die Hebevorrichtung wird vorzugsweise in der Mitte des Koffers fest an der magnetischen Grundplatte montiert. Sie verbindet das Oberteil und das Unterteil des Koffers. Sie besteht aus zwei oder mehr Rohren, die teleskopartig verbunden sind. Der Koffer wird mittels der Hebevorrichtung vorzugsweise automatisch geöffnet. Die automatische Öffnung und das Anheben des Kofferoberteils erfolgt vorzugsweise durch ein Hydrauliksystem im Inneren der Rohre. Die automatische Öffnung ist auch durch andere bekannte Methoden möglich, wie z.B. einer Feder aus Metall oder Kunststoff, Luftdruck, Gummiseilen oder ähnliches. Durch das Öffnen der Schließvorrichtung wird das Oberteil des Koffers durch die Hebevorrichtung automatisch um ca. 10 bis 20 cm vom Unterteil des Koffers abgehoben. Die Öffnung des Koffers ist alternativ durch manuelles Anheben des Kofferoberteils ohne Verwendung einer Vorrichtung zur automatischen Öffnung möglich. Nach dem Öffnungsvorgang verbleibt das Oberteil im angehobenen Zustand. Hierdurch ist die Abdeckfolie im Inneren des Koffers leicht zugänglich. Nach dem Anbringen der Abdeckfolie am Fahrzeug wird das Kofferoberteil herabgedrückt und verschließt sich danach automatisch.

Ein feststehendes Rohr kann als alternative Methode zur Verbindung von Oberteil und Unterteil des Koffers montiert werden. Es wird wie die Hebevorrichtung vorzugsweise in der Mitte des Koffers fest an der magnetischen Grundplatte montiert. Nach dem Öffnen des Schlosses kann das Kofferoberteil manuell abgenommen werden. Nach dem Anbringen der Abdeckfolie am Fahrzeug wird das Kofferoberteil manuell auf das Kofferunterteil aufgesetzt und verschließt sich danach automatisch.

Die magnetische Grundplatte befindet sich am Unterteil des Kofferunterteils. Sie dient vorzugsweise zur Befestigung des Koffers am Fahrzeug. Aufgrund der magnetischen Grundplatte muss der Koffer lediglich auf das Dach des Fahrzeugs aufgesetzt werden. Weitere Montagearbeiten sind nicht erforderlich. Die Grundplatte kann auf der Unterseite wahlweise mit einer vollständigen magnetischen Beschichtung versehen sein oder nur teilweise beschichtet sein bzw. mit einzelnen Magneten vorzugsweise an den Ecken der Grundplatte bestückt sein. An der Oberseite der Grundplatte ist vorzugsweise eine Gewindestange mit ca. 2 bis 4 cm Länge montiert, die zur Befestigung der Hebevorrichtung bzw. des feststehenden Rohrs dient.

Andere Vorrichtungen zur Befestigung und Fixierungen des Koffers sind mit entsprechender Anpassung an der Unterseite des Kofferunterteils alternativ möglich. Montage auf einem Dachgepäckträger oder einer Dachreling mittels einer Querstange. Montage an einer im bzw. am Fahrzeugdach montierten, geklebten bzw. verschweißten Vorrichtung, in der eine Gewindestange eingeschraubt ist bzw. eingeschraubt werden kann. Montage an einer bereits vorhandenen Vorrichtung zur Befestigung einer Dachantenne.

Die Gummibänder sind vorzugsweise an den Ecken der Oberseite der magnetischen Grundplatte befestigt. Die anderen Enden der Gummibänder werden vorzugsweise im Inneren des Kofferunterteils montiert. Am Kofferunterteil befinden sich entsprechende Öffnungen, die den Zugang der Gummibänder in den Innenteil des Koffers ermöglichen. Alternativ zu den Gummibändern sind auch Bänder, Seile oder ähnliches aus anderen Materialien verwendbar.

Die Schließvorrichtung mit Schloss ist vorzugsweise in der Mitte des Oberteils des Kofferoberteils angebracht. Im oberen Teil der Rohre der Hebevorrichtung befindet sich das Aufnahmeteil des Schlosses. Durch das Öffnen der Schließvorrichtung löst sich das Schloss im Kofferoberteil aus dem Aufnahmeteil. Danach öffnet sich der Koffer automatisch bzw. kann das Kofferoberteil vom Kofferunterteil abgenommen werden. Nach dem Herabdrücken bzw. dem Aufsetzen des Kofferoberteils rastet das Schloss der Schließvorrichtung automatisch im Aufnahmeteil der Schließvorrichtung ein. Vorzugsweise wird ein hochwertiges Zylinderschloss verwendet. Alternativ sind einfachere Schlösser möglich. Alternativ kann die Schließvorrichtung an der Seite des Koffers, insbesondere an der rechten Seite (Beifahrerseite) angebracht werden.

Die Abdeckfolie ist vorzugsweise in der Mitte der Folie mit einer Öffnung versehen, die einen geringfügig größeren Durchmesser als die Rohre der Hebevorrichtung bzw. das feststehende Rohr hat. Die Öffnung dient zur Befestigung der Abdeckfolie an den Rohren. Die Rohre werden hierfür in die Öffnung eingeführt. Der Rand der Öffnung wird vorzugsweise durch eine breitrandige Öse aus Metall oder Kunststoff eingefasst, wodurch das Einreißen der Folie durch starke Beanspruchung vermieden wird. Zusätzlich wird der Rand durch eine mehrlagige Vernähung der Folie und/oder durch andere Methoden der Randverstärkung verstärkt. Das Material der Abdeckfolie entspricht dem von derzeit im Handel erhältlichen Abdeckfolien (Nylon, Polyester, Polyamid u.ä.). Insbesondere im Sommer kann alternativ eine Folie mit heller Beschichtung, Silberbeschichtung oder aus anderen lichtreflektierenden Materialien verwendet werden. Die Folie ist mit dem Firmennamen und dem Firmenlogo der Herstellerfirma oder der Vertriebsfirma des Koffers versehen, um Diebstahl und anschließenden Weiterverkauf zu erschweren. Zudem wird der Firmenname, das Firmenlogo oder sonstige Aufdrucke von anderen interessierten Firmen, Gesellschaften und Personen für deren Werbezwecke angebracht.

Das Abdecken des Fahrzeugs erfolgt mit der im Koffer verstauten Abdeckfolie. Diese ist nach dem Öffnen des Koffers zugänglich. Aufgrund der Fixierung der Folie am Koffer kann die Abdeckfolie schrittweise entnommen und um das Fahrzeug herum angebracht werden, ohne das die Folie während dieses Vorgangs verrutschen oder verwehen kann. Durch die Abdeckung wird das Fahrzeug vorzugsweise vollständig abgedeckt. Die Ausmaße der Folie können wahlweise jedoch auch eine nur teilweise Abdeckung ermöglichen. Der Koffer kann insbesondere für die Abdeckung in den Sommermonaten alternativ mit einer hellen oder reflektierenden Abdeckfolie ausgestattet werden, die das Fahrzeug vollständig oder nur teilweise ("Halbgarage"), insbesondere nur die Scheiben, abdeckt. Dadurch ist ein noch leichteres und schnelleres Anbringen der Folie möglich.

Das Verstauen der Abdeckfolie erfolgt in umgekehrter Reihenfolge des zuvor beschriebenen Abdeckvorgangs. Danach erfolgt das Schließen des Koffers durch Herabdrücken des Kofferoberteils auf das Kofferunterteil bzw. durch das manuelle Aufsetzen des Kofferoberteils. Am Ende dieses Vorgangs verschließt sich der Koffer automatisch durch die vorhandene Schließvorrichtung.

Das Abnehmen des gesamten Koffers erfolgt durch das Anheben des Kofferunterteils bei zuvor geöffneten Koffer. Das Kofferunterteil hebt sich im ersten Schritt des Anhebens um ca. 10 cm von der magnetischen Grundplatte ab. Im zweiten Schritt werden die Ecken der magnetischen Grundplatte vorzugsweise mittels Gummibändern vom Fahrzeugdach abgezogen. Im dritten Schritt kann die magnetische Grundplatte vollständig vom Fahrzeugdach abgezogen werden. Zeitgleich mit dem Abnehmen des Koffers erfolgt der automatische Schließvorgang mittels der im Koffer vorhandenen automatischen Hebevorrichtung. Bei Verwendung des feststehenden Rohrs wird das Kofferoberteil nach dem Abnehmen des Koffers vom Dach manuell auf das Kofferunterteil aufgesetzt und damit ebenfalls automatisch verschlossen.

Kurze Beschreibung der Zeichnungen

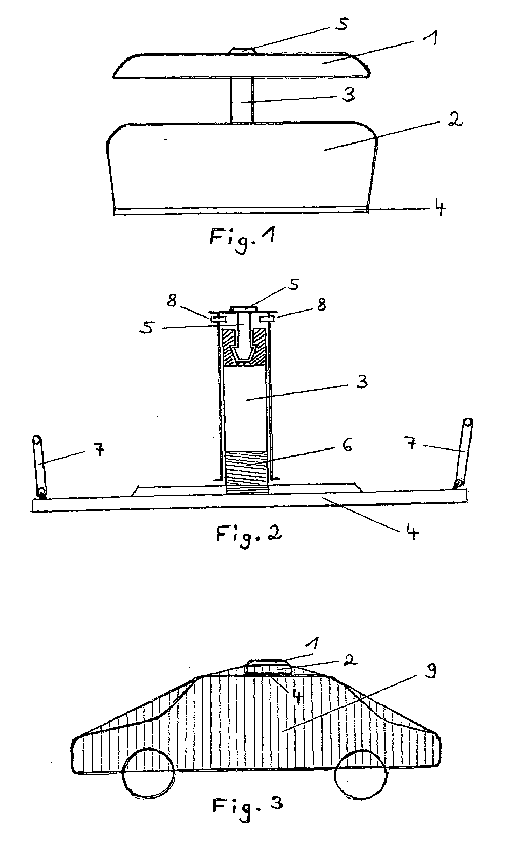

Die Zeichnungen (Fig. 1 bis 3) zeigen eine bevorzugte Ausführungsform der Erfindung, die ein nicht einschränkendes Beispiel darstellt.
Fig. 1 ist eine Seitenansicht der Erfindung. Sie zeigt den geöffneten Koffer mit dem Kofferoberteil 1, dem Kofferunterteil 2, der automatischen Hebevorrichtung 3 bzw. dem feststehenden Rohr 3, der magnetischen Grundplatte 4 und der Schließvorrichtung mit Schloss 5.
Fig. 2 ist ein Längsschnitt der automatischen Hebevorrichtung 3 und der magnetischen Grundplatte 4. Des Weiteren zeigt sie einen Längsschnitt der Schließvorrichtung 5, der an der Grundplatte 4 montierten Gewindestange 6 und Gummibänder 7 und der an der Hebevorrichtung 3 angebrachten Ventile 8.
Fig. 3 ist eine Seitenansicht der Erfindung, die den am Fahrzeugdach mittels magnetischer Grundplatte 4 angebrachten Koffer mit verschlossenem Kofferoberteil 1 und Kofferunterteil 2 sowie die am Fahrzeug angebrachte Abdeckfolie 9 zeigt.

Natürlich können an der vorstehend beschriebenen Erfindung entsprechende Änderungen und/oder Ergänzungen vorgenommen werden, sofern diese das Gebiet und den Umfang der Erfindung nicht überschreiten.

Zum Beispiel kann die Hebevorrichtung als Verbindung von Kofferoberteil und Kofferunterteil durch andere funktionsmäßig äquivalente Elemente ersetzt werden. Auch die magnetische Grundplatte zum Anbringen und Fixieren des Koffers kann durch Verwendung von anderen funktionsmäßig äquivalenten Vorrichtungen und Elementen ersetzt werden.

## Patentansprüche

1. Abschließbarer Koffer zum Verstauen von Abdeckfolien für Personenkraftfahrzeuge, **dadurch gekennzeichnet, dass** der Koffer mittels einer magnetischen Grundplatte auf dem Dach eines Personenkraftzeugs angebracht werden kann, im Koffer eine automatische Hebevorrichtung oder ein feststehendes Rohr montiert ist, an der eine Abdeckfolie zum Abdecken des Personenkraftfahrzeugs fest angebracht ist und der Koffer sowie die Abdeckfolie durch eine am Koffer angebrachte Schließvorrichtung mit Schloss vor Diebstahl und Verwehung geschützt sind.

2. Abschließbarer Koffer nach Anspruch 1, **dadurch gekennzeichnet, dass** durch eine automatische Hebevorrichtung das Oberteil des Koffers nach dem Aufschließen des Koffers durch die Hebevorrichtung automatisch um ca. 10 bis 20 cm angehoben wird.

3. Hebevorrichtung nach Anspruch 2, **dadurch gekennzeichnet, dass** die automatische Hebevorrichtung aus zwei oder mehreren Rohren besteht, die teleskopartig verbunden sind und in deren Inneren ein Hydrauliksystem eingearbeitet ist.

4. Hebevorrichtung nach Anspruch 2, **dadurch gekennzeichnet, dass** an den Rohren der automatischen Hebevorrichtung zwei Ventile angebracht sind, mittels derer die Geschwindigkeit des Öffnens und des Schließens durch das Einströmen und Ausströmen von Luft geregelt werden kann.

5. Abschließbarer Koffer nach Anspruch 1, **dadurch gekennzeichnet, dass** ein feststehendes Rohr alternativ zur automatischen Hebevorrichtung montiert werden kann, das als Verbindung von Kofferoberteil und Kofferunterteil bzw. der Grundplatte dient.

6. Abschließbarer Koffer nach Anspruch 1, **dadurch gekennzeichnet, dass** sich am Unterteil des Koffers eine magnetische Grundplatte befindet, deren gesamte Unterseite mit einer magnetischen Beschichtung oder nur teilweise mit Magneten bzw. mit einer magnetischen Beschichtung versehen ist.

7. Magnetische Grundplatte nach Anspruch 6, **dadurch gekennzeichnet, dass** auf der Oberseite der magnetischen Grundplatte eine Gewindestange oder eine ähnliche Montagemöglichkeit angebracht ist, die zur Befestigung der automatischen Hebevorrichtung oder alternativ des feststehenden Rohrs dient.

8. Abschließbarer Koffer nach Anspruch 1, **dadurch gekennzeichnet, dass** sich vorzugsweise auf der Oberseite des Kofferoberteils oder alternativ z.B. an der rechten Seite des Koffers (Beifahrerseite des Fahrzeugs) eine Schließvorrichtung mit einem Zylinderschloss oder einem anderen sicher verschließbaren Schloss befindet.

9. Schließvorrichtung mit Schloss nach Anspruch 8, **dadurch gekennzeichnet, dass** im oberen Ende der Hebevorrichtung bzw. des feststehenden Rohrs das Aufnahmeteil der Schließvorrichtung eingearbeitet ist, in dem der am Kofferoberteil angebrachte Teil der Schließvorrichtung beim Schließen des Koffers automatisch einrastet und den Koffer fest verschließt.

10. Abschließbarer Koffer nach Anspruch 1, **dadurch gekennzeichnet, dass** am Koffer eine Abdeckfolie angebracht ist, in die vorzugsweise in der Mitte der Folie eine Öffnung mit einem Durchmesser von ca. 2 bis 5 cm eingearbeitet ist, die vorzugsweise durch eine breitrandige Öse aus Kunststoff oder Metall und/oder eine andere geeignete Randverstärkung versehen ist und zur Befestigung an der automatischen Hebevorrichtung oder dem feststehenden Rohr dient.

11. Abdeckfolie nach Anspruch 10, **dadurch gekennzeichnet, dass** auf die Abdeckfolie das Logo der Erfindung und der Firmenname des herstellenden Unternehmens oder des Vertriebsunternehmens angebracht wird, um **dadurch** vorzugsweise den Wiederverkauf einer gestohlenen Abdeckfolie zu erschweren.

12. Abdeckfolie nach Anspruch 10, **dadurch gekennzeichnet, dass** auf die Abdeckfolie der Firmenname, das Firmenlogo und/oder andere Aufdrucke von anderen Unternehmen, Gesellschaften oder Personen angebracht werden, um damit zu werben oder ähnliche Zwecke zu erfüllen.
